# EUROPÄISCHE PATENTANMELDUNG

(11) **EP 1 502 664 A2**
(43) Veröffentlichungstag der Anmeldung: **02.02.2005**
(21) Anmeldenummer: 04103170.9
(22) Anmeldetag: 05.07.2004
(51) Int. Cl.: B07B 13/00, B29C 45/17, B65G 33/04

(54) **Trennförderer**

(30) Priorität: 25.07.2003 DE 10334291
(71) Anmelder: EXTE EXTRUDERTECHNIK GMBH, D-51688 Wipperfürth (DE)
(72) Erfinder: Friedl, Dan, 51688, Wipperfürth (DE)
(74) Vertreter: Müller, Enno, Dipl.-Ing.

(57) **Zusammenfassung**

Die Erfindung betrifft einen Trennförderer (1) zum Fördern unterschiedlicher Teile (10,11), die voneinander zu sondern sind, über eine Förderstrecke (a,b). Weiter betrifft die Erfindung auch ein Verfahren zum Trennen von unterschiedlichen Teilen, insbesondere zum Trennen von Kunststoffspritzteilen von zugeordneten Angussteilen. Die Erfindung schlägt vorrichtungsmäßig vor, dass eine Transportwendel (4) vorgesehen ist, die um ihre Längsachse (A) rotierend angetrieben ist und über einen dem Beginn der Förderstrecke zugeordneten Teilbereich (a) von einer außenseitigen Hüllwand (5) umgeben ist. Verfahrensmäßig, dass innerhalb der Separiervorrichtung zunächst eine gemeinsame umwälzende Förderung der Teile in einem rohrartig geschlossenen Raum erfolgt, zur Erreichung einer gewissen gleichmäßigen Ausrichtung der Teile, und dass danach eine Weiterförderung durch eine Transportwendel erfolgt, wobei die Abstandsöffnungen zwischen einzelnen Wendeln durch Herausfallenlassen der Teile einer gemeinsamen Größe zum Separieren genutzt werden.

## Beschreibung

Die Erfindung betrifft eine Separiervorrichtung in Form eines Trennförderers zum Fördern unterschiedlicher Teile, insbesondere Kunststoffspritzteile, die über eine Förderstrecke voneinander zu sondern sind.

Weiterhin betrifft die Erfindung auch ein Verfahren zum Trennen von unterschiedlichen Teilen, insbesondere zum Trennen von Kunststoffspritzteilen von zugeordneten Angussteilen, vorzugsweise von gegenüber langgestreckten Angussteilen kleinerer Kunststoffspritzteile, wobei die voneinander getrennten Angussteile und Kunststoffspritzteile ungeordnet in eine Separiervorrichtung gegeben werden.

Derartige Trennförderer und Separiervorrichtungen sind für sich im Stand der Technik bekannt. Insbesondere in der Kunststoffspritztechnik finden sie Anwendungen, um Angüsse und Kunststoffspritzteile, die aus Kunststoffspritzformen mit mehreren Nestern ausgeworfen werden, geeignet voneinander zu sep arieren.

Wenn auch derartige Vorrichtungen für eine Reihe von Anwendungen zufriedenstellende Ergebnisse liefern, hat es sich doch gezeigt, dass bei Angüssen, die relativ langgestreckt sind und demgegenüber kurzen Kunststoffspritzteilen bekannte Separiervorrichtungen keine zufriedenstellenden Ergebnisse liefern.

Aufgabe der Erfindung ist es daher, einen Trennförderer und ein Verfahren zum Trennen von Kunststoffspritzteilen anzugeben, die bzw. das insbesondere auch langgestreckte Angussteile von demgegenüber kleineren Kunststoffspritzteilen vorteilhaft trennen bzw. separieren läßt.

Diese Aufgabe ist hinsichtlich des Trennförderers zunächst und im Wesentlichen dadurch gelöst, dass eine Transportwendel vorgesehen ist, die um ihre Längsachse rotierend angetrieben ist und über einen dem Beginn der Förderstrecke zugeordneten Teilbereich von einer außenseitigen Hüllwand umgeben ist.

Durch die so umhüllte Transportwendel, auf einem ersten Teilbereich der Transportstrecke, läßt sich eine gewisse Längsausrichtung und Ordnung der schon voneinander getrennt angegebenen Teile, Angussteile und Kunststoffspritzteile, erreichen. Da die Transportwendel auf einem weiteren Teilbereich der Transportstrecke freiliegt, also sich Zwischenräume zwischen den Wendeln ergeben, durch welche Teile hindurchfallen können, ergibt sich dann bei geeigneter Wahl der Zwischenräume, dass die Kunststoffspritzteile hinausfallen und die relativ langen Angussteile weitergefördert werden bis zum Ende der Transportstrecke.

Es versteht sich, dass die Steigung der schraubengangartigen Transportwendel jedenfalls in ihrem freiliegenden Bereich, da hiermit auch die Größe der Zwischenräume bestimmt ist, an die Größe der zu trennenden Teile angepaßt sein muß. Geeignet ist es, dass eine Abmessung eines Zwischenraums in einer Längsrichtung der Transportwendel einer Längenabmessung des kürzeren der Teile entspricht, aber deutlich kürzer ist als eine Längenabmessung des längeren der Teile. Die Abstände der Windungen können auch unterschiedlich sein. Es genügt, wenn - im freien Bereich der Transportwendel - ein oder zwei für das Durchfallen der kleineren Teile ausreichend große Abstände vorgesehen sind.

Zwar ist es bevorzugt im Rahmen der Erfindung, eine durchgehende Transportwendel, auch in dem von dem Rohr umhüllten Bereich, vorzusehen.

Grundsätzlich ist dies aber nicht erforderlich. In dem umhüllten Bereich müssen nur Vorkehrungen getroffen werden, im Sonderfall beispielsweise allein durch Schwerkraft, dass eine Längsförderung hin zu dem freien Bereich der Transportwendel erfolgt.

In Weiterbildung ist auch vorgesehen, dass die Teile im Inneren der Transportwendel gefördert werden. Die Transportwendel beschreibt also gleichsam einen Hüllraum, innerhalb dem die Teile gefördert werden.

Die Transportwendel kann über ihre Länge verteilt einzelne Nocken aufweisen. Dieses hat sich als vorteilhaft herausgestellt, um beispielsweise ineinander verhakte Teile oder dergleichen zu trennen.

In weiterer Ausgestaltung ist auch vorgesehen, dass die Transportwendel vermittels der drehfest mit dieser verbundenen Hüllwand angetrieben ist. So kann ein Rollenantrieb, der außen auf die Hüllwand einwirkt, die Transportwendel rotierend, zusammen rotierend also mit der Hüllwand auch, antreiben. Die Hüllwand kann geeigneterweise ein Rohr sein. Die Transportwendel kann in der Hüllwand austauschbar aufgenommen sein.

Hinsichtlich des Verfahrens zum Trennen von Teilen, also beispielsweise von Kunststoffspritzteilen von zugeordneten Angussteilen, insbesondere von gegenüber langgestreckten Angussteilen kleineren Kunststoffspritzteilen, wobei die voneinander getrennten Angussteile und Kunststoffspritzteile ungeordnet in eine Separiervorrichtung gegeben werden, schlägt die Erfindung zunächst und im Wesentlichen zur Lösung der Aufgabe, ein vorteilhaftes Separierverfahren anzugeben, vor, dass innerhalb der Separiervorrichtung zunächst eine gemeinsame umwälzende Förderung der Teile in einem rohrartig geschlossenen Raum erfolgt, zur Erreichung einer gewissen gleichmäßigen Ausrichtung der Teile, und dass danach eine Weiterförderung durch eine Transportwendel erfolgt, wobei Abstandsöffnungen zwischen einzelnen Wendeln durch Herausfallenlassen und dadurch Separieren der Teile einer bestimmten gemeinsamen Größe genutzt werden.

Wenn auch die Erfindung vorrangig im Hinblick auf die Separierung von Kunststoffspritzteilen von Angussteilen erläutert ist, kann sie grundsätzlich auch bei anderen derartigen Aufgaben Einsatz finden. Jedenfalls dort, wo relativ lange Teile von relativ kurzen Teilen zu trennen sind.

Die Wendelsteigung und damit die Abstände der Öffnungen zwischen den Wendeln, die entsprechend schraubengangartig durchgehend verlaufend vorzugsweise vorgesehen sind, kann je nach Anwendungsfall variiert werden.

Die Längsachse der Transportwendel kann horizontal verlaufen. Aber auch geneigt. Je nach Aufgabenstellung sowohl zum Ende der Transportstrecke ansteigend wie auch abfallend.

Nachstehend ist die Erfindung anhand der beigefügten Zeichnung, die ein Ausführungsbeispiel wiedergibt, in weiterer Einzelheit erläutert. Hierbei zeigt:
- Fig. 1: eine schematische, teilweise geschnittene Seitenansicht der Vorrichtung und
- Fig. 2: einen Querschnitt durch die Vorrichtung gemäß Fig. 1, geschnitten entlang der Linie II - II.

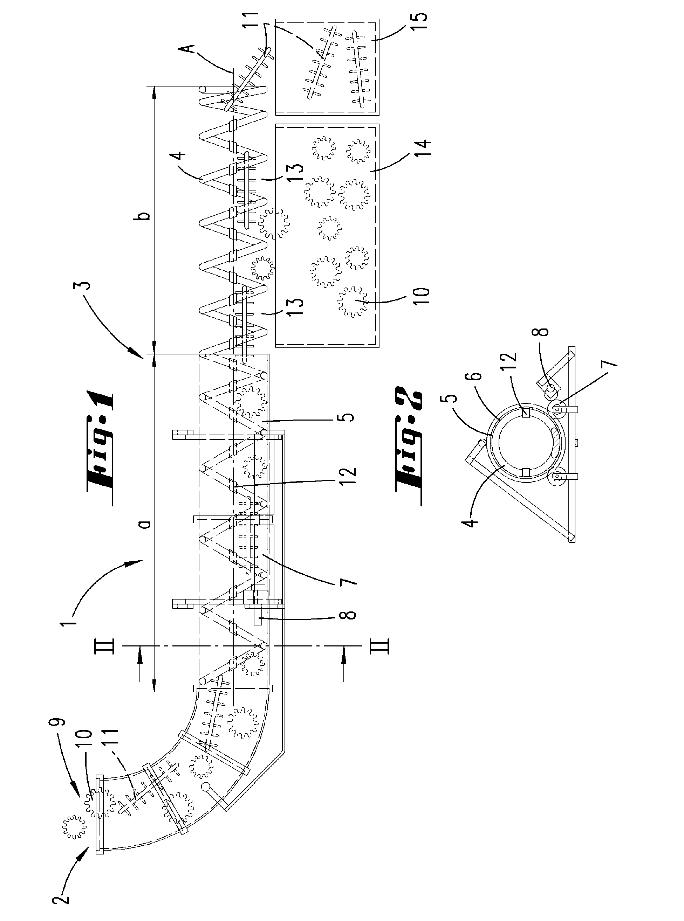

Dargestellt und beschrieben ist zunächst mit Bezug zu Fig. 1 ein Trennförderer 1, der einen Einlasstrichter 2 und eine Förderstrecke 3 aufweist.

Die Förderstrecke 3 besteht im Wesentlichen aus einer Transportwendel 4, die über einen Teilbereich a ihrer Länge innerhalb eines Rohres 5 angeordnet ist. Und zwar derart, dass die Transportwendel 4 außenseitig an einer Innenwand 6 des Rohres 5 anliegt, vgl. Fig. 2.

Das Rohr 5 ist über Walzen 7 gelagert und angetrieben. Beispielsweise kann eine der Walzen mit einem Antriebsmotor 8 verbunden sein.

Es erfolgt durch den Antrieb eine Drehung um eine Längsachse A der Transportwendel 4. Da das Rohr 5 drehfest mit der Transportwendel 4 verbunden ist, wird durch Drehung des Rohres 5 eben auch die Transportwendel 4 rotatorisch angetrieben. Wie ersichtlich, werden in den Einlasstrichter zwar voneinander getrennte aber eine ungeordnete Menge bildende Teile, hier Kunststoffspritzteile 9 eingegeben. Im Einzelnen handelt es sich um fertige Spritzteile 10 und zugehörige Angussteile 11.

Wie ersichtlich, sind die Spritzteile 10 vergleichsweise klein bzw. mit einer vergleichsweise geringen Länge ausgebildet gegenüber den Angussteilen 11. Die Angussteile 11 haben beim Ausführungsbeispiel die doppelte oder eine größere Länge im Vergleich zu den Spritzteilen 10.

In dem ersten Bereich a der Transportstrecke erfolgt durch das Drehen und fördernde Transportieren eine gewisse Vorsortierung und Ausrichtung der Teile. Die langgestreckten Teile 11 nehmen eine mehr oder weniger axiale Ausrichtung in Bezug auf die Längsachse A der Transportwendel ein. Etwa zusammenhängende Teile oder sonstige Hindernisse werden durch an der Transportwendel vorgesehene Nocken 12 aufgelöst.

Über den zweiten Teilbereich b der Förderstrecke erstreckt sich die Transportwendel alleine. Entsprechend sind Zwischenräume 13 gegeben, durch welche die kleineren Teile 10 herausfallen können. Sie werden in einem ersten Behältnis 14 aufgefangen. Am Ende der Transportstrecke b fallen dann die größeren Teile 11 in einen zweiten Behälter 15. Die gewünschte Trennung der Teile ist erreicht.

Die Transportwendel 4 ist in dem Rohr 5 herausnehmbar angeordnet. Je nach Größenverhältnissen und absoluten Größen der zu separierenden Teile werden Transportwendel mit unterschiedlicher Steigung, und damit sich ergebenden unterschiedlich großen Zwischenräumen 13, die bei der reinen Transportwendel wie dargestellt entsprechend schraubengangartig verlaufen, eingesetzt.

Alle offenbarten Merkmale sind (für sich) erfindungswesentlich. In die Offenbarung der Anmeldung wird hiermit auch der Offenbarungsinhalt der zugehörigen/ beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Trennförderer (1) zum Fördern unterschiedlicher Teile (10, 11), die voneinander zu sondern sind, über eine Förderstrecke (a, b), **gekennzeichnet durch** eine Transportwendel (4), die um ihre Längsachse (A) rotierend angetrieben ist und über einen dem Beginn der Förderstrecke zugeordneten Teilbereich (a) von einer außenseitigen Hüllwand (5) umgeben ist.

2. Trennförderer nach Anspruch 1 oder insbesondere danach, **dadurch gekennzeichnet, dass** die Teile (10, 11) im Inneren der Transportwendel (4) gefördert werden.

3. Trennförderer nach einem oder mehreren der vorhergehenden Ansprüche oder insbesondere danach, **dadurch gekennzeichnet, dass** die Transport-wendel (4) über ihre Länge verteilt Nocken (12) aufweist.

4. Trennförderer nach einem oder mehreren der vorhergehenden Ansprüche oder insbesondere danach, **dadurch gekennzeichnet, dass** die Transport-wendel (4) vermittels der drehfest mit dieser verbundenen Hüllwand (5) angetrieben ist.

5. Trennförderer nach einem oder mehreren der vorhergehenden Ansprüche oder insbesondere danach, **dadurch gekennzeichnet, dass** die Hüllwand (5) ein Rohr (5) ist.

6. Trennförderer nach einem oder mehreren der vorhergehenden Ansprüche oder insbesondere danach, **dadurch gekennzeichnet, dass** die Transportwendel (4) in der Hüllwand (5) austauschbar aufgenommen ist.

7. Verfahren zum Trennen von Teilen, vorzugsweise von Kunststoffspritzteilen von zugeordneten Angussteilen, insbesondere von gegenüber langgestreckten Angussteilen kleineren Kunststoffspritzteile, wobei die voneinander getrennten Angussteile und Kunststoffspritzteile ungeordnet in eine Separiervorrichtung gegeben werden, **dadurch gekennzeichnet, dass** innerhalb der Separiervorrichtung zunächst eine gemeinsame umwälzende Förderung der Teile in einem rohrartig geschlossenen Raum erfolgt, zur Erreichung einer gewissen gleichmäßigen Ausrichtung der Teile und dass danach eine Weiterförderung durch eine Transportwendel erfolgt, wobei die Abstandsöffnungen zwischen einzelnen Wendeln durch Herausfallenlassen der Teile einer gemeinsamen Größe zum Separieren genutzt werden.
